# EUROPÄISCHE PATENTANMELDUNG

(11) **EP 1 526 288 A1**
(43) Veröffentlichungstag der Anmeldung: **27.04.2005**
(21) Anmeldenummer: 04105229.1
(22) Anmeldetag: 21.10.2004
(51) Int. Cl.: F15B 13/00, F16K 27/00

(54) **Pneumatische Ventilanordnung mit einem Kanaltrennelement**

(30) Priorität: 24.10.2003 DE 10349706
(71) Anmelder: Bosch Rexroth AG, 71701 Schwieberdingen (DE)
(72) Erfinder: Rühle, Wolfgang, 71706, Unterriexingen (DE); Bergmann, Klaus, 70499, Stuttgart (DE)
(74) Vertreter: Kietzmann, Lutz

(57) **Zusammenfassung**

Pneumatische Ventilanordnung zur Bildung einer Ventileinheit, umfassend eine Mehrfachanschlussplatte (1) zur Bereitstellung von pneumatischen Anschlüssen für mindestens zwei hieran befestigte elektropneumatische Mehrwegeventile (2a,2b), die über von Hauptkanalabschnitten (3a-3c) der Mehrfachanschlussplatte (1) abzweigende korrespondierende Querkanäle (8) angeschlossen sind, wobei durch ein einsetzbares Kanaltrennelement (11a;11b) ein zugeordneter Hauptkanalabschnitt (3a;3b;3c) in zwei Teilkanäle aufteilbar ist, um eine Drucktrennung des mindestens einen an der Mehrfachanschlussplatte (1) befestigten Mehrwegeventils (2a) gegenüber des mindestens einen weiteren Mehrwegeventils (2b) zu schaffen.

## Beschreibung

Die Erfindung betrifft eine pneumatische Ventilanordnung zur Bildung einer Ventileinheit, umfassend eine Mehrfachanschlussplatte zur Bereitstellung von pneumatischen Anschlüssen für mindestens zwei hieran befestigte elektropneumatische Mehrwegeventile, die über von Hauptkanalabschnitten der Mehrfachanschlussplatte abzweigende korrespondierende Querkanäle angeschlossen sind.

Das Einsatzgebiet der pneumatischen Ventilanordnung der hier interessierenden Art erstreckt sich vornehmlich auf Ventileinheiten. Eine Ventileinheit wird durch flächige Aneinanderreihung mehrerer jeweils durch Anschlussplatte und Mehrwegeventil gebildeter pneumatischer Ventilanordnungen geschaffen. Eine Ventileinheit stellt somit eine örtlich konzentrierte Zusammenfassung mehrerer Ventile zur Ansteuerung von Druckmittelaggregaten -beispielsweise Pneumatikzylindern- innerhalb eines pneumatischen Systems dar.

Aus dem Produktkatalog "Das Pneumatik-Programm von Bosch" (Ausgabe 15.31, Drucknummer 1 987 765 015 von 02/1998, Seite 15.31/5.56) geht eine Ventileinheit hervor. Mehrere Anschlussplatten sind derart über korrespondierende Seitenflächen miteinander verbunden, dass sich in Folge der aneinandergereihten Hauptkanalabschnitte mehrere quer durch alle Anschlussplatten verlaufende Hauptkanäle bilden. Hierbei ist ein zentraler Hauptkanal zur Speisedruckversorgung der Mehrwegeventile vorgesehen. Zwei weitere, benachbarte Hauptkanäle dienen als Entlüftungskanäle. Diese Kanäle stehen mit jedem Mehrwegeventil über abzweigende Querkanäle in Verbindung, die an einer Montagefläche der Anschlussplatte einmünden, um die Druckmittelver- und Entsorgung des zugeordneten Mehrwegeventils zu schaffen. Das Mehrwegeventil ist hier nach Art eines 5/2- Wegeventils ausgebildet und über ein elektropneumatisches Pilotventil elektrisch ansteuerbar.

In bestimmten Einsatzfällen ist es gewünscht, einen Teil der Mehrwegeventile innerhalb der Ventileinheit mit einem anderen Speisedruck zu versorgen als den übrigen Teil der Mehrwegeventile. Bei der vorstehend beschriebenen Ventilanordnung wir dies gewöhnlich dadurch realisiert, indem ein Verschlussstopfen zwischen zwei benachbarten Anschlussplatten eingefügt wird, der den Hauptkanal (Speisedruckkanal) in zwei unterschiedliche Teilkanäle aufteilt, welche dann jeweils über die beidseitigen Endplatten der Ventileinheit mit unterschiedlichen Drücken speisbar sind.

In jüngster Zeit geht der Trend bei Ventileinheiten zu immer schmaleren Mehrwegeventilen, wobei unter Beibehaltung hoher Durchflussraten eine möglichst kompakte Bauform der Ventileinheit erzielt werden soll. Die Verwendung einer einzigen korrespondierenden schmalen Anschlussplatte zu einem schmalen Mehrwegeventil stößt an technische Grenzen. Insbesondere verhindern die ebenfalls in moderne Anschlussplatten integrierten elektrischen Verbindungsmittel zwischen einer zentralen Steuereinheit zu jedem Mehrwegeventil eine weitere Verkleinerung der Anschlussplatten unter Beibehaltung einer vollständigen Modulbauweise. So ist es erforderlich, dass elektrische Steckermittel von Anschlussplatte zu Anschlussplatte die elektrische Verbindung über die Länge der gesamten Ventileinheit durchschleifen. Diese elektrischen Steckermittel erfordern zur Gewährleistung einer sicheren elektrischen Verbindung genügend Bauraum, so dass eine hiervon abhängige Mindestdicke der Anschlussplatte nicht unterschritten werden kann.

Ein bisher praktizierter technischer Weg zur Lösung dieses Problems besteht darin, eine Anschlussplatte für nicht nur ein, sondern mehrere Mehrwegeventile zu verwenden. Insbesondere Doppelanschlussplatten zur fluidischen und elektrischen Versorgung von zwei hieran befestigten Mehrwegeventilen sind gebräuchlich.

Wird nun versucht, bei neueren Ventileinheiten mit derartigen Mehrfachanschlussplatten eine Kanaltrennung vorzunehmen, so würde die Verwendung herkömmlicher Verschlussstopfen zwischen zwei Doppelanschlussplatten es nur ermöglichen, die Kanaltrennung nach jedem zweiten Mehrwegeventil vorzunehmen. Diese Lösung ist jedoch nicht praxisgerecht.

Es ist daher die Aufgabe der vorliegenden Erfindung eine pneumatische Ventilanordnung mit Mehrfachanschlussplatten zu schaffen, welche dennoch eine Kanaltrennung an der Stelle eines jeden Mehrwegeventils auf einfache Weise ermöglicht.

Die Aufgabe wird ausgehend von einer pneumatischen Ventilanordnung gemäß dem Oberbegriff des Anspruchs 1 gemeinsam mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass durch ein einsetzbares Kanaltrennelement ein zugeordneter Hauptkanalabschnitt in zwei Teilkanäle aufteilbar ist, um eine Drucktrennung des mindestens einen an der Mehrfachanschlussplatte befestigten Mehrwegeventils gegenüber des mindestens einen weiteren Mehrwegeventils zu schaffen.

Der Vorteil der erfindungsgemäßen Lösung besteht insbesondere darin, dass mit einem einfachen Zubehörteil, welches in den Hauptkanalabschnitt hineinragend einsetzbar ist eine Drucktrennung zwischen zwei benachbarten auf der gemeinsamen Mehrfachanschlussplatte befestigten Mehrwegeventil vorgenommen werden kann. Die Länge, mit welcher das Kanaltrennelement in den Hauptkanalabschnitt hineinragen muss, ist also von der Anzahl der Ventilplätze an der Mehrfachanschlussplatte abhängig. Bei einer Zweifachanschlussplatte, d.h. eine Anschlussplatte für zwei Mehrwegeventile, ragt das Kanaltrennelement also ca. bis zur Hälfte in den Hauptkanalabschnitt hinein.

Das erfindungsgemäße Kanaltrennelement kann sowohl in einen Hauptkanalabschnitt zur Belüftung der angeschlossenen Mehrwegeventile als auch in einen Hauptkanalabschnitt zur Entlüftung derselben eingesetzt werden. Auch bei der Entlüftung von zu einer Ventileinheit zusammengefügten Mehrwegeventilen kann eine Kanaltrennung erforderlich sein.

Vorzugsweise dient die im Rahmen der vorliegenden Erfindung zum Einsatz kommende Mehrfachanschlussplatte auch der Bereitstellung von elektrischen Anschlüssen für die zugeordneten Mehrwegeventile. Hierzu ist die Mehrfachanschlussplatte mit einem parallel zu den pneumatischen Hauptkanalabschnitten verlaufenden Elektrokanalabschnitt zur Unterbringung entsprechender elektrischer Leitungsmittel versehen. Durch diese Maßnahme wird der gesamt pneumatische und elektrische Anschluss für die Mehrwegeventile auf die Seite der Mehrfachanschlussplatte gelegt, so dass ein einfacher Austausch einzelner Mehrwegeventile ohne viel Montagaufwand möglich ist. Außerdem sind die elektrischen Leitungsmittel innerhalb des Elektrokanals der Ventileinheit vor schädigenden Umwelteinflüssen geschützt untergebracht.

Das Kanaltrennelement, welches bei der erfindungsgemäßen pneumatischen Ventilanordnung zum Einsatz kommt, besteht vorzugsweise aus einem stirnseitigen, geschlossenen zylindrischen Bodenabschnitt zur Drucktrennung und einem gegenüberliegenden, mit einem Bund versehenden Randabschnitt zur Begrenzung der Einstecktiefe des Kanaltrennelements in den Hauptkanalabschnitt sowie einer dazwischenliegenden - vorzugsweise zylinderartigen - Wandung, welche mindestens eine Öffnung zur Herstellung der Verbindung zwischen dem Hauptkanalabschnitt und dem Querkanal des angeschlossenen Mehrwegeventils aufweist. Die sich hieraus ergebende, in etwa topfförmige Grundgestalt des Kanaltrennelements ermöglicht eine besonders einfache Herstellung.

Vorzugsweise besteht das Kanaltrennelement aus Aluminium oder aus Kunststoff. Im Bereich des Bodenabschnitts kann das Kanaltrennelement mit einem außenradialen Dichtring versehen werden. Diese Maßnahme gewährleistet eine zuverlässige Abdichtung der entstehenden Teilkanäle. Bei einem aus Aluminium hergestellten Kanaltrennelement bietet es sich an, den Dichtring in einer korrespondierenden Nut seitens des Kanaltrennelements zu fixieren. Bei einem Kanaltrennelement aus Kunststoff ist es auch denkbar, eine dichtringartige Anformung - vorzugsweise in zwei Komponenten-Spritztechnik herzustellen.

Vorzugsweise weist das Kanaltrennelement zur Belüftung eine größere Nennweite auf als das Kanaltrennelement zur Entlüftung der Mehrwegeventile. Bei einem Kanaltrennelement mit geringer Nennweite bietet es sich aus Stabilitätsgründen an, die Öffnung zur Herstellung der Verbindung zwischen dem Hauptkanalabschnitt und dem Querkanal in Form eines kreisförmigen Durchbruches auszubilden. Der Durchbruch kann jedoch auch rechteckförmig oder anders gestaltet sein, was sich insbesondere bei einem Kanaltrennelement mit großer Nennweite anbietet.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt.
- Fig. 1: eine perspektivische Ansicht einer pneumatischen Ventilanordnung im zusammengebauten Zustand mit einer Endplatte zur Druckluftversorgung,
- Fig.2: eine perspektivische Ansicht einer Mehrfachanschlussplatte der pneumatischen Ventilanordnung gemäß Fig.1,
- Fig.3a: ein Kanaltrennelement gemäß einer ersten Ausführungsform, und
- Fig.3b: ein Kanaltrennelement nach einer zweiten Ausführungsform.

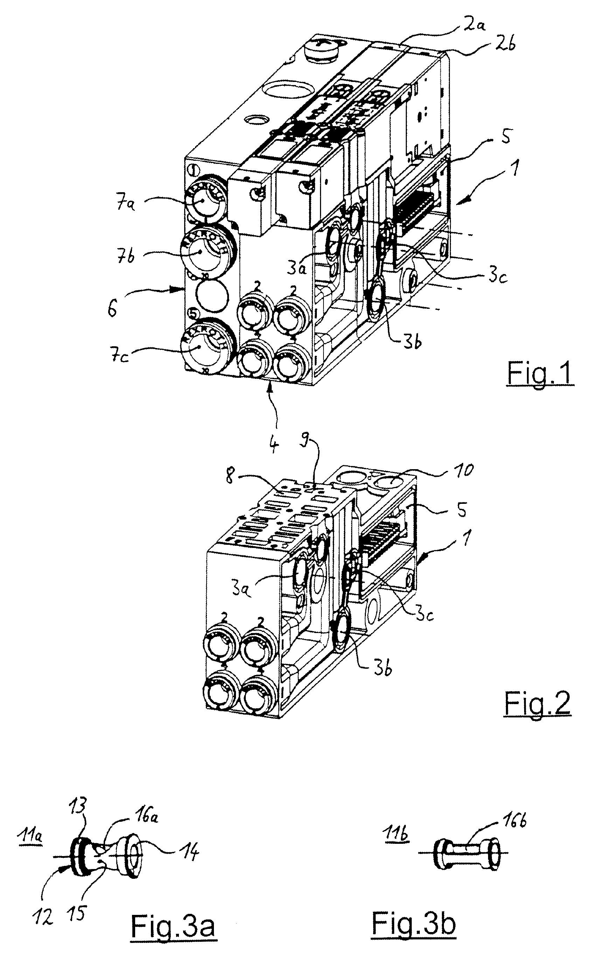

Gemäß Fig. 1 sind auf einer Mehrfachanschlussplatte 1 zur Bereitstellung von pneumatischen Anschlüssen zwei hieran befestigte elektropneumatische Mehrwegeventile 2a, 2b vorgesehen. Die Mehrfachanschlussplatte besitzt einen Hauptkanalabschnitt 3c zur Speisedruckversorgung sowie zwei Hauptkanalabschnitte 3b und 3a zur Entlüftung der Mehrwegeventile 2a, 2b. Stirnseitig der Mehrfachanschlussplatte 1 sind Arbeitsanschlüsse 4 vorgesehen. Über die Arbeitsanschlüsse 4 werden - hier nicht weiter dargestellt - pneumatische Aggregate angesteuert. Weiterhin umfasst die Mehrfachanschlussplatte 1 einen Elektrokanalabschnitt 5 zur Unterbringung elektrischer Leitungsmittel. Die elektrischen Leitungsmittel dienen dem elektrischen Anschluss des elektropneumatischen Mehrwegeventils 2a bzw. 2b an eine - hier nicht weiter dargestellte - elektronische Steuereinheit.

Die vorstehend beschriebene pneumatische Ventilanordnung ist hier mit einer Abschlussplatte 6 zur Bildung einer Ventileinheit versehen, welche einen zentralen Speisedruckanschluss 7a für die gesamte, aus mehreren pneumatischen Ventilanordnungen aufgebaute Ventileinheit bereitstellt. Weiterhin sind zwei zentrale Entlüftungsanschlüsse 7b und 7c vorgesehen, an welchen beispielsweise Schalldämpfungselemente aufsteckbar sind, um die in Folge Entlüftung entstehende Abluft an die Atmosphäre abzuführen. Der zentrale Speisedruckanschluss 7a steht mit dem Hauptkanalabschnitt 3c zur Speisedruckversorgung in Verbindung; die zentralen Entlüftungsanschlüsse 7b und 7c stehen mit dem Hauptkanalabschnitt 3a bzw. 3b in Verbindung.

Wie aus der Fig.2 hervorgeht gehen von den Hauptkanalabschnitten 3a - 3c für jeden Ventilplatz jeweils korrespondierende Querkanäle 8 ab, welche in die Montagefläche 9 für die - hier nicht weiter dargestellten - Mehrwegeventile einmünden. An der Montagfläche 9 für die elektropneumatischen Mehrwegeventile sind ebenfalls je Ventilplatz Steckeröffnungen 10 zur Erstellung der elektrischen Verbindung von dem Elektrokanalabschnitt 5 zu dem elektropneumatischen Mehrwegeventil vorgesehen.

Ein Kanaltrennelement 11a gemäß Fig. 3 a ist zum Einstecken in einen Hauptkanalabschnitt 3 a oder 3b zur Entlüftung vorgesehen. Diese Ausführungsform des Kanaltrennelements 11a kommt mit einer relativ geringen Nennweite aus. Das Kanaltrennelement 11a besteht im Wesentlichen zu einer Stirnseite aus einem geschlossenen zylindrischen Bodenabschnitt 12. Der Bodenabschnitt 12 dient der unmittelbaren Drucktrennung und trägt außenradial einen Dichtring 13, um diese Drucktrennung abgedichtet vorzunehmen. Gegenüberliegend des Bodenabschnitts 12 ist das Kanaltrennelement 11a mit einem Randabschnitt 14 versehen, welches in einen Bund ausläuft, um hiermit die Einstecktiefe des Kanaltrennelements 11a in den - hier nicht weiter dargestellten - Hauptkanalabschnitt zu begrenzen. Zwischen dem Bodenabschnitt 12 und dem Randabschnitt 14 erstreckt sich eine Wandung 15. Die durch die axiale Länge der Wandung 15 bestimmte Länge des Kanaltrennelements 11a entspricht ca. einer halben Länge des zugeordneten Hauptkanalabschnitts, um bei einer Mehrfachanschlussplatte mit zwei Ventilplätzen eine Drucktrennung auf der Hälfte des Hauptkanalabschnitts vorzunehmen. Es werden Kanaltrennelemente verschiedener Längen benötigt, falls Mehrfachanschlussplatten mit mehr als zwei Ventilplätzen zum Einsatz kommen. Nach dem Einsetzen des Kanaltrennelements 11a in den korrespondierenden Hauptkanalabschnitt ermöglicht eine Öffnung 16 innerhalb der Wandung 15 die Verbindung zu dem dem Hauptkanalabschnitt zugeordneten - und hier nicht weiter dargestellten Querkanal, welcher zum Mehrwegeventil führt. Die Öffnung 16a ist bei diesem Kanaltrennelement 11a in Form eines kreisförmigen Durchbruchs ausgebildet, welcher dem dargestellten Kanaltrennelement trotz der geringen relativen Nennweite eine ausreichende Stabilität verleiht.

Bei dem Kanaltrennelement 11b gemäß Fig.3b ist die Öffnung 16b rechteckförmig ausgebildet. Das Kanaltrennelement 11b ist einem Hauptkanalabschnitt zur Belüftung zugeordnet und weist insoweit eine größere Nennweite als das vorstehend beschriebene Kanaltrennelement 11a auf. Ansonsten entspricht das Kanaltrennelement 11b diese Ausführungsbeispiels im weiteren Aufbau dem vorstehend beschriebenen Kanaltrennelement 11a, worauf an dieser Stelle Bezug genommen wird.

Die Erfindung ist nicht beschränkt auf die vorstehend beschriebenen bevorzugten Ausführungsbeispiele. Es sind vielmehr auf Abwandlungen hiervon denkbar, die vom Schutzumfang der nachfolgenden Ansprüche Gebrauch machen. So ist es beispielsweise auch denkbar, das erfindungsgemäße Kanaltrennelement als einstückiges Bauteil herzustellen. Hierfür bietet sich Kunststoff als Material an, wobei die außenradiale Abdichtung über Zwei-Komonenten-Spritzgießen direkt anformbar ist.

### Bezugszeichenliste

- **1**: Mehrfachanschlussplatte
- **2**: Mehrwegeventil
- **3**: Hauptkanalabschnitt
- **4**: Arbeitsanschlüsse
- **5**: Elektrokanalabschnitt
- **6**: Abschlussplatte
- **7**: zentraler Anschluss
- **8**: Querkanal
- **9**: Montagefläche
- **10**: Steckeröffnungen
- **11**: Kanaltrennelement
- **12**: Bodenabschnitt
- **13**: Dichtring
- **14**: Randabschnitt
- **15**: Wandung
- **16**: Öffnung

## Patentansprüche

1. Pneumatische Ventilanordnung zur Bildung einer Ventileinheit, umfassend eine Mehrfachanschlussplatte (1) zur Bereitstellung von pneumatischen Anschlüssen für mindestens zwei hieran befestigte elektropneumatische Mehrwegeventile (2a,2b), die über von Hauptkanalabschnitten (3a-3c) der Mehrfachanschlussplatte (1) abzweigende korrespondierende Querkanäle (8) angeschlossen sind,
**dadurch gekennzeichnet, dass** durch ein einsetzbares Kanaltrennelement (11a; 11b) ein zugeordneter Hauptkanalabschnitt (3a;3b;3c) in zwei Teilkanäle aufteilbar ist, um eine Drucktrennung des mindestens einen an der Mehrfachanschlussplatte (1) befestigten Mehrwegeventils (2a) gegenüber des mindestens einen weiteren Mehrwegeventils (2b) zu schaffen.

2. Pneumatische Ventilanordnung nach Anspruch 1,
**dadurch gekennzeichnet, dass** das Kanaltrennelement (11a) in den Hauptkanalabschnitt (3a;3b) zur Entlüftung einsetzbar ist.

3. Pneumatische Ventilanordnung nach Anspruch 1,
**dadurch gekennzeichnet, dass** das Kanaltrennelement (11b) in den Hauptkanalabschnitt (3c) zur Belüftung einsetzbar ist.

4. Pneumatische Ventilanordnung nach Anspruch 1,
**dadurch gekennzeichnet, dass** die Mehrfachanschlussplatte (1) auch der Bereitstellung von elektrischen Anschlüssen für die zugeordneten Mehrwegeventile (2a, 2b) dient, wozu die Mehrfachanschlussplatte (1) mit einem parallel zu den pneumatischen Hauptkanalabschnitten verlaufenden Elektrokanalabschnitt (5) zur Unterbringung elektrischer Leitungsmittel versehen ist.

5. Kanaltrennelement für den Einsatz bei einer pneumatischen Ventilanordnung nach einem der vorstehenden Ansprüche,
mit einem stirnseitigen geschlossenen zylindrischen Bodenabschnitt (12) zur Drucktrennung und einem gegenüberliegenden mit einem Bund versehenen Randabschnitt (14) zur Begrenzung der Einstecktiefe sowie einer dazwischenliegenden Wandung (15), die mindestens eine Öffnung (16a; 16b) zur Herstellung der Verbindung zwischen dem Hauptkanalabschnitt (3a-3c) und dem Querkanal (8) aufweist.

6. Kanaltrennelement nach Anspruch 5,
**dadurch gekennzeichnet, dass** das Kanaltrennelement () zur Belüftung eine größere Nennweite als das Kanaltrennelement () zur Entlüftung aufweist.

7. Kanaltrennelement nach Anspruch 5,
**dadurch gekennzeichnet, dass** die Öffnung (16a) zur Herstellung der Verbindung zwischen dem Hauptkanalabschnitt (3a; 3b) und dem Querkanal (8) in Form eines kreisförmigen Durchbruchs ausgebildet ist.

8. Kanaltrennelement nach Anspruch 5,
**dadurch gekennzeichnet, dass** die Öffnung (16b) zur Herstellung der Verbindung zwischen dem Hauptkanalabschnitt (3c) und dem Querkanal (8) in Form eines rechteckförmigen Durchbruchs ausgebildet ist.

9. Kanaltrennelement nach Anspruch 5,
**dadurch gekennzeichnet, dass** das Kanaltrennelement (11a; 11b) im Bereich des Bodenabschnitts (12) mit einem außenradialen Dichtring (13) zur abgedichteten Drucktrennung versehen ist.

10. Kanaltrennelement nach Anspruch 5,
**dadurch gekennzeichnet, dass** das Kanaltrennelement (11a; 11b) aus Aluminium oder aus Kunststoff besteht, wobei der Dichtring (13) ein separates Bauteil bildet bzw. einstückig hieran angeformt ist.
